# EUROPÄISCHE PATENTSCHRIFT

(11) **EP 3 722 548 B1**
(45) Veröffentlichungstag und Bekanntmachung des Hinweises auf die Patenterteilung: **07.06.2023**
(21) Anmeldenummer: 20167497.5
(22) Anmeldetag: 01.04.2020
(51) Int. Cl.: E06B 3/67, F24S 50/80, F24S 20/66, F24S 20/69, F24S 40/52

(54) **GEBÄUDEELEMENT MIT EINEM KLIMAELEMENT MITTELS TRANSPARENTER WÄRMEDÄMMUNG ZUR WÄRMEGEWINNUNG AUS SOLARER STRAHLUNGSENERGIE UND LAMELLENELEMENT**
BUILDING ELEMENT WITH A CLIMATIC ELEMENT BY MEANS OF TRANSPARENT THERMAL INSULATION FOR OBTAINING HEAT FROM SOLAR RADIATION ENERGY AND ELEMENT OF LAMELLA
ÉLÉMENT DE BÂTIMENT AVEC UN ÉLÉMENT CLIMATIQUE AU MOYEN D'UNE ISOLATION THERMIQUE TRANSPARENTE DESTINÉ À LA RÉCUPÉRATION DE CHALEUR DE L'ÉNERGIE SOLAIRE ET UN ÉLÉMENT DE LAMELLE

(30) Priorität: 11.04.2019 CH 4952019
(43) Veröffentlichungstag der Anmeldung: 14.10.2020
(73) Patentinhaber: Affentranger Bau AG, 6147 Altbüron (CH)
(72) Erfinder: Affentranger, Markus, 6147 Altbüron (CH)
(74) Vertreter: Zwick, Evelyn

(56) Entgegenhaltungen:
- WO-A2-2009/130041
- AT-B- 398 217
- AT-B- 406 599
- DE-A1- 19 509 545
- DE-A1- 19 945 483
- DE-U1- 20 311 814

## Beschreibung

### Technisches Gebiet

Die vorliegende Erfindung betrifft ein Gebäudeelement zum kachelartigen Verkleiden einer vertikalen Fassade und zur Wärmegewinnung aus solarer Strahlungsenergie mittels transparenter Wärmedämmung TWD. Dieses umfasst ein Klimaelement mit einem flachen Trägerelement zum flächigen Anbringen an eine Fassade und eine flächige Absorberschicht, die auf der Aussenseite des Trägerelements angebracht ist, zur Absorption von einfallender Sonnenstrahlung, und eine die Absorberschicht vollständig abdeckende, flächige und transparente Wärmedämmung. Zudem umfasst das Gebäudeelement ein flächiges Lamellenelement als Beschattungselement.

### Stand der Technik

Bekannt sind aus dem Stand der Technik verschiedenste Systeme zur Wärmegewinnung aus solarer Strahlungsenergie mittels transparenter Wärmedämmung, wobei typischerweise eine geschwärzte, als Absorberschicht dienende Speicherwand hinter einer transparenten Wärmedämmschicht angebracht wird. Am Tag heizt sich die Wand durch die absorbierte Sonnenstrahlung und den durch die Glasscheibe bedingten Treibhauseffekt auf, nachts gibt die Wand einen Teil der gespeicherten Wärme zeitversetzt wieder ab. Dieser Effekt ist allerdings nur in den Wintermonaten wünschenswert und nicht in den Sommermonaten.

Dank einer Beschattung in den Sommermonaten wird erreicht, dass im Hochsommer teilweise Storenanteile und Klimaanlagen eingespart werden können. Das Gebäude wird im Winter beheizt und im Sommer teilweise gekühlt, wodurch Heiz- bzw. Klimatisierungskosten eingespart werden. Beispielsweise strahlt auf eine Südfassade im Raum Luzern jährlich eine Sonnenenergie von rund 792 kWh/m2 ein, wobei rund 42% davon in den sechs Wintermonaten auf die Fassade fällt.

Aus der WO 2009/130041 A1 ist ein Gebäudeelement zur Wärmegewinnung aus solarer Strahlungsenergie mittels transparenter Wärmedämmung bekannt. Das dort beschriebene Gebäudeelement weist eine Absorberschicht sowie eine darüberliegende, transparente Wärmedämmschicht auf, zur Bereitstellung einer transparenten Wärmedämmung. Dabei weist das Gebäudeelement ein Beschattungselement in Form eines Beschattungsvorsprungs auf, welches derart ausgestaltet und angeordnet ist, dass die Fassade oder Gebäudehülle in den Sommermonaten durch das Beschattungselement teilweise von den steil einfallenden Sonnenstrahlen abgeschirmt wird, wenn diese in einem Winkel von ca. >40° bis 64° einfallen, während die Fassade in den Wintermonaten aufgrund der flach einfallenden Sonnenstrahlen nahezu voll besonnt ist, wenn sie mit einem Winkel von ca. 16,5° bis <40° auftreffen.

Insbesondere wird hier durch Einhaltung eines Grenzwinkels von rund 40° für die einfallende Sonnenstrahlung sichergestellt, dass auch in der Übergangszeit zwischen Sommer und Winter jeweils optimale Heiz- und Klimatisierungsbedingungen geschaffen werden.

Das dort beschriebene Gebäudeelement hat den Nachteil, dass die Bauweise vergleichsweise kompliziert ist und bei der Montage kaum Korrekturen vorgenommen werden können.

Dasselbe trifft auch für Gebäudeelemente, wie sie in der AT 398217 und in der AT 406599 beschrieben sind, zu, die demselben Zweck diesen.

In der DE 19945483 A1 wird ebenfalls ein Gebäudeelement mit einer Transparenten Wärmedämmung beschrieben. Es ist blockartig ausgestaltet und umfasst mehrere Lamellen in einem fest vorgegebenen Winkel. Diese sind mit einem Montagerahmen zusammengehalten, mit dem das Gebäudeelement an eine mit einem Absorber versehenen Fassade montiert werden kann.

Die DE 19509545 A1 beschreibt zudem eine transparente Wärmedämmung, zum Anbringen zwischen Glasscheiben.

### Darstellung der Erfindung

Die vorliegende Erfindung hat sich zur Aufgabe gestellt, ein Gebäudeelement sowie eine Gebäudehülle bereitzustellen, welche die Nachteile des bekannten Standes der Technik überwindet und insbesondere eine vereinfachte Bauweise aufweisen. Eine weitere Aufgabe ist es, ein Verfahren anzugeben, um ein solches Gebäudeelement zu montieren.

Diese Aufgaben werden gelöst durch ein Gebäudeelement resp. eine Gebäudehülle und ein Verfahren gemäss den Merkmalen der entsprechenden Patentansprüche.

Erfindungsgemäss ist bei einem eingangs beschriebenen Gebäudeelement das als Beschattungselement dienende, flächige Lamellenelement am unteren oder oberen Rand des Klimaelements horizontal oder in einem Winkel α nach aussen abfallend dazu anbringbar. Im montierten Zustand befindet es sich, in vertikaler Richtung betrachtet, neben der Absorberschicht und neben der transparenten Wärmedämmung und überragt die Absorberschicht horizontal auf einem Überstand, zur Beschattung einer im Gebrauch darunter angeordneten Absorberschicht. Durch das Verhältnis des Überstandes zu einer Höhe der Absorberschicht ist ein Grenzwinkel einstellbar, unter welchem einfallende Sonnenstrahlung mindestens teilweise auf die Absorberschicht auftreffen kann und über welchem die Absorberschicht vollständig beschattet ist.

Im Vergleich zu dem aus der WO 2009/130041 A1 bekannten Gebäudeelement, bei welchem unter Zuhilfenahme einer metallischen Reflektorschicht der Grenzwinkel eingestellt wird, kann beim erfindungsgemässen Gebäudeelement in vereinfachter Weise auf eine Reflektorschicht verzichtet werden.

Ein derartiges Gebäudeelement hat den Vorteil, dass es einfach herstellbar und montierbar ist. Da der Aufbau in Kacheln modular ist, lässt es sich einfach an alle Masse von Fassaden anpassen, am Rand fallen wenige Zuschnitte an. Es hat sich als zweckmässig erwiesen, die Klima- und Lamellenelemente in einer horizontalen Länge von etwa 1.2 m zu erstellen, wobei jedes Klimaelement eine Gesamthöhe entlang der Fassade von etwa 20 cm bei 2.5 cm Dicke aufweist. Die Lamellenelemente beanspruchen etwa 15 mm Höhe einer Fassade, sie sind etwa 15 mm dick und stehen etwa 12 cm waagerecht nach aussen ab, allenfalls mit einem kleinen Winkel nach aussen abfallend. Alle Masse können auch etwa ±30% von den angegebenen Werten abweichen, wobei insbesondere die horizontale Tiefe der Lamellenelemente an verschiedenen Fassaden eines Gebäudes verschieden ausfallen können, angepasst an die Himmelsrichtungen, zu denen die jeweiligen Fassaden ausgerichtet sind.

Die Montage kann einfach mittels U-förmigen Klammern erfolgen mit tellerförmig abgewinkelten Enden, unter denen die Klimaelemente eingeklemmt werden, während die Lamellenelemente in die U-Förmigen Aussparungen eingeklemmt werden und allenfalls mit einem Bolzen oder dergleichen vor dem Herausfallen gesichert werden. Die Klimaelemente liegen direkt auf der Fassade auf, um eine gute Wärmeleitung zu generieren. Zwischen den Klammern, die etwa 3 mm stark sind, werden kleine Spalte geschaffen, welche einen Dampfausgleich der Fassade gewährleisten.

Ein bevorzugtes Ausführungsbeispiel des Erfindungsgegenstandes wird nachstehend im Zusammenhang mit den anliegenden Zeichnungen beschrieben. Es zeigen:
- Fig. 1: eine perspektivische Ansicht eines Gebäudeelements;
- Fig. 2: einen Längsschnitt durch die erste bevorzugte Ausführungsform des erfindungsgemässen Gebäudeelements, montiert an einem Wandelement;
- Fig. 3: eine perspektivische Ansicht einer Montageklammer;
- Fig. 4: eine perspektivische Ansicht eines Gebäudes mit einer erfindungsgemässen Gebäudehülle umfassend eine Vielzahl der erfindungsgemässen Gebäudeelemente.

### Beschreibung

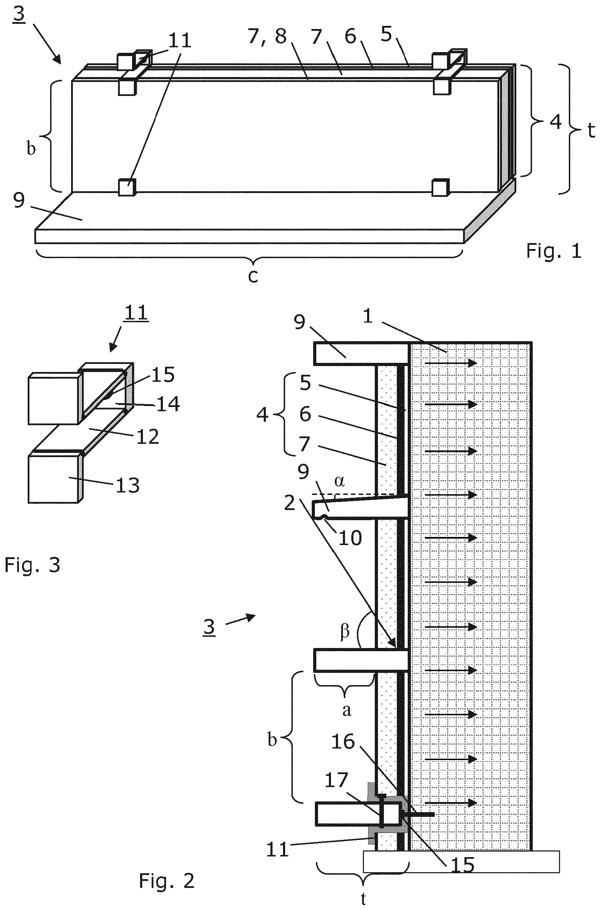

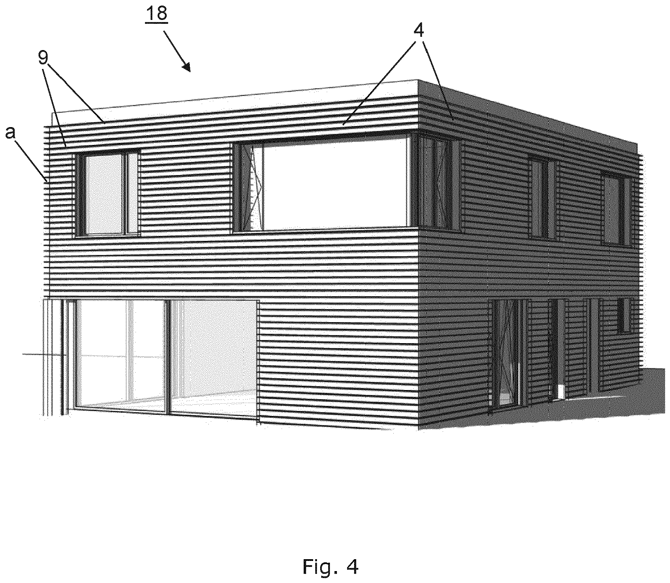

Die Figuren 1 und 2 zeigen Gebäudeelemente 3, jeweils in perspektivischer Ansicht resp. im Längsschnitt, montiert an einer Fassade 1 eines Gebäudes. Zum besseren Verständnis ist in Fig. 4 ein Gebäude mit Wandungen 1 dargestellt mit einer erfindungsgemässen Gebäudehülle 18, die aus einer Vielzahl von Gebäudeelementen 3 besteht, die kachelförmig aneinander angereiht montiert sind. Die Gebäudehülle 18 und insbesondere jedes der Gebäudeelemente 3 dient zur Wärmegewinnung aus solarer Strahlungsenergie mittels transparenter Wärmedämmung.

Jedes Gebäudeelement 3, siehe Fig. 1 und 2, umfasst im Wesentlichen zwei Komponenten, ein Klimaelement 4 und ein flächiges Lamellenelement 9 als Beschattungselement. Jedes Klimaelement 4 umfasst wiederum zunächst ein flaches Trägerelement 5 zum flächigen Anbringen an eine Fassade 1. Auf der Aussenseite dieses Trägerelements 5 ist schliesslich eine flächige Absorberschicht 6 angebracht mit einer vertikalen Höhe b, zur Absorption von einfallender Sonnenstrahlung 2. Diese Absorberschicht 6 ist wiederum vollständig von einer flächigen und transparenten Wärmedämmung 7 abgedeckt.

Das flächige Lamellenelement 9 dient als Beschattungselement, welches am unteren oder oberen Rand des Klimaelements 4 horizontal oder in einem Winkel α nach aussen abfallend dazu anbringbar ist. Der abfallende Winkel α kann wahlweise nur auf der oberen Oberfläche ausgestaltet sein, oder auch auf der unteren Oberfläche, sodass das Lamellenelement 9 parallele Oberflächen aufweist, was deren Herstellung, je nach Materialwahl, vereinfachen kann.

In montiertem Zustand befindet sich das Lamellenelement 9, in vertikaler Richtung betrachtet, neben der Absorberschicht 6 und neben der transparenten Wärmedämmung 7 und überragt die Absorberschicht 6 horizontal auf einem Überstand. Dieser Überstand gewährleistet die mindestens teilweise Beschattung einer im Gebrauch darunter angeordneten Absorberschicht 6. Wie in Fig. 2 dargestellt, überragt das Lamellenelement 9 die Wärmedämmung 7 um einen freien Überstand a.

Erfindungsgemäss ist durch das Verhältnis des Überstandes zur Höhe b der Absorberschicht 6 ein Grenzwinkel β einstellbar, unter welchem (Einfallswinkel der Sonnenstrahlung 2 ist kleiner als (3) einfallende Sonnenstrahlung 2 mindestens teilweise auf die Absorberschicht 6 auftreffen kann und über welchem (Einfallswinkel der Sonnenstrahlung 2 ist grösser als β) die Absorberschicht 6 vollständig beschattet ist.

Durch die angepasste Wahl der Verhältnisse der Höhe b zum Überstand an die Ausrichtung der zu verkleidenden Fassade 1 kann die Beheizung dieser Fassade 1 im Winter und ihre Beschattung im Sommer optimiert werden.

Ein weiterer Vorteil dieses Gebäudeelements 3 liegt in der kachelförmigen Belegung der Klimaelemente 4 und der Lamellenelemente 9. Dadurch, dass jedes Lamellenelement 9 vertikal neben den Absorberschichten 6 und neben den transparenten Wärmedämmungen 7 angeordnet ist, kann das Material für die Absorberschicht 6 und die Wärmedämmung 7 optimal eingesetzt werden.

Dies ist insbesondere dann vorteilhaft, wenn hochwertige, teure Materialien dafür verwendet werden. Zudem erlaubt dies die Montage relativ kleiner, handlicher Module, die einfach auf Paletten angeliefert und von einem Handwerker problemlos montiert werden können, da sie nicht zu schwer sind. Anpassungen an den Rändern können einfach vor Ort vorgenommen werden.

In den Breitengraden von Mitteleuropa, etwa der Schweiz, hat es sich als sinnvoll erwiesen, den Grenzwinkel β zwischen 12° und 75°, vorzugsweise zwischen 40° und 70° einzurichten. In den Sommermonaten wird die Fassade 1 dann in den heissen Mittagsstunden beschattet, sodass sich das Gebäude nicht weiter erwärmen kann. Im Winter fällt diese Beschattung hingegen klein aus, das Gebäudeelement 3 kann den weitaus grössten Teil der Sonneneinstrahlung absorbieren und an das Gebäude weiterleiten.

Der Überstand des Lamellenelements 9 beträgt dabei vorzugsweise zwischen 40 mm und 200 mm, insbesondere zwischen 80 mm und 150 mm. Die Höhe b der Absorberschicht 6 ist bevorzugt zwischen 100 mm und 500 mm, noch bevorzugter zwischen 150 mm und 250 mm. Damit ist eine Kleinmassstabigkeit gegeben, welche aus baulicher Sicht sinnvoll ist, da die Lamellenelemente 9 nicht zu weit vorstehen, und die Handhabung der Komponenten während der Montage ist angenehm.

Vorzugsweise ist auf der Unterseite des Lamellenelements 9 nahe seinem äusseren Rand eine Tropfnase 10 in Form einer Furche angebracht. Dadurch wird verhindert, dass Regenwasser an der Unterseite des Lamellenelements 9 entlang zum Gebäude fliessen kann, wodurch ein Schaden entstehen würde. Eine solche Tropfnase ist vor allem dann wichtig, wenn die untere Kante des Lamellenelements 9 horizontal verläuft und nicht im Winkel α nach aussen abfällt.

Dieser Winkel α, der vorzugsweise zumindest an der Oberfläche des Lamellenelements 9 ausgestaltet ist, sollte dort ein Gefälle zwischen α = 1° bis 20°, bevorzugt zwischen α = 2° bis 5° aufweisen, damit Regenwasser abfliessen kann. Je steiler der Winkel ist, desto eher wird empfohlen, das Lamellenelement 9 mit parallelen Oberflächen auszugestalten.

Vorzugsweise wird das Lamellenelement 9 in heller Farbe ausgeführt, welche nur wenig der auftreffenden Infrarotstrahlung absorbiert. Andererseits sollte die Oberfläche nicht reflektierend sein, wie dies bei anderen Herstellern üblich ist. Ein Absorptionsgrad der Infrarotstrahlung von 25-75% ist optimal. Besonders geeignet sind Lamellenelemente 9 welche aus Naturstein, Beton, insbesondere Schaumbeton, Mörtel, Ton, Keramik, Kalksandstein, Holz, Metall oder Kunststoff gefertigt sind oder einer Kombination davon.

Die transparente Wärmedämmschicht 7 umfasst vorzugsweise Siliciumdioxid (Glas), Kieselsäure, Aerogel, Wasserglas, Natronwasserglas, Kaliwasserglas, Glasvlies, Kunstharz, Plexiglas oder eine Kombination davon. Es hat sich als geeignet herausgestellt, eine Packung von Aerogel zu verwenden, welche nach aussen mit einer bruchsicheren Glasscheibe abgeschlossen wird. Wenn die Aerogel Packung in einer Hülle unter Vakuum verpackt vorliegt, wird die Wärmeisolation nochmals erhöht. Alternativ können Packungen in Gittern hergestellt werden, welche luftdurchlässig sind. Packungen von Aerogel haben vorzugsweise eine Dicke von 10-40 mm, idealerweise 15-25 mm. Die Glasscheibe davor kann zwischen 5 und 15 mm aufweisen.

Die Absorberschicht 6 wird vorzugsweise aus Siliciumcarbid, Siliciumcarbonat, Silikatfarbe, Silikonharzfarbe, Dispersionsfarbe, Mörtel oder aus einer Kombination daraus gefertigt. Sie ist mit etwa 1-5 mm sehr dünn.

Gesamthalt bedeckt ein erfindungsgemässes Gebäudeelement 3 einen Fassadenabschnitt von 15 bis 40 cm Gesamthöhe h und 50 bis 200 cm Breite c. Eine Breite c von ca. 120 cm hat sich als sinnvoll erwiesen.

Die Gebäudeelemente 3 können auf verschiedene Arten an einer Fassade 1 montiert werden. In der Regel ist die Höhe des Trägerelements 5 gleich der Höhe b. Es ist aber auch möglich, dass das Trägerelement 5 Gebäudeseitig höher ausgestaltet ist als die Höhe b der Absorberschicht 6 und der Wärmedämmschicht 7, sodass es sich auch noch über die Rückseite des Lamellenelements 9 erstreckt. Das Trägerelement 5 kann auf dieser Fläche über eine Montagevorrichtung für ein Lamellenelement 9 verfügen (nicht dargestellt). In diesem Fall muss nur das Trägerelement 5 an die Fassade 1 montiert werden, welches das Klimaelement 4 bereits vollständig umfasst, beispielsweise mittels eines Thermoklebers. Das Lamellenelement 9 wird in diesem Fall anschliessend daran montiert. Als Montagevorrichtung eignen sich Spiesse, auf die das Lamellenelement 9 mit entsprechenden Bohrungen eingeschoben und anschliessend gesichert werden, oder Klemmen. Die Trägerelemente 5 sollten in diesem Fall etwas beabstandet von einander an der Fassade 1 angebracht werden, um einen Dampfausgleich zu ermöglichen.

Bevorzugt aber werden die Gebäudeelemente 3 mit zwei oder mehr U-förmigen Montageklammern 11 an eine Fassade 1 angebracht. Eine solche ist in Fig. 3 dargestellt. Die Enden einer U-förmigen Montageklammer 11 weisen seitlich tellerförmig umgebogene Flügel 13 auf und können direkt an eine Fassade 1 montiert werden. Dazu ist am Boden 14 des U-Bereichs 12 beispielsweise ein Montageloch 15 angebracht, an dem es mit einer Befestigungsschraube 16 oder dergleichen an der Fassade 1 befestigt werden kann. Unter den Flügeln 13 von mindestens zwei solchen Montageklammern 11, die horizontal auf gleicher Höhe angebracht sind, wobei die Flügel 13 jeweils vertikal nach oben und unten ausgerichtet sind, kann anschliessend ein Klimaelement 4 an einer Seite eingeklemmt werden, Anschliessend wird es mit weiteren zwei oder mehr solchen Montageklammern 11 auf seiner gegenüberliegenden Seite gleichermassen fixiert. Das Lamellenelement 9 wird schliesslich zum Befestigen in den U-Bereichen 12 von mindestens zwei Montageklammern 11 eingeklemmt. Auf diese Art kann die gesamte Fassade 1 eines Gebäudes umhüllt werden.

Eine erfindungsgemässe Gebäudehülle 18 umfasst ein wärmespeicherndes Wandelement 1 eines Gebäudes mit einer Aussenfassade, die mit einer Vielzahl kachelartig angeordneter, erfindungsgemässer Gebäudeelemente 3 verkleidet ist.

Vorzugsweise ist das wärmespeichernde Wandelement 1, welches mit den Gebäudeelementen 3 verkleidet ist oder wird, mineralienbasiert und besteht vorwiegend aus Backstein, Mauerwerk, Beton, insbesondere Schaumbeton, Mörtel, Ton, Keramik, Kalksandstein, Lehm, oder aus einer beliebige Kombination daraus. Dies ist wichtig, damit die vom Klimaelement 4 absorbierte Wärme in das Gebäude abgeleitet werden kann. Ist das Wandelement 1 hingegen wärmeisolierend, so ist dieser Wärmefluss nicht möglich.

Zwischen dem Gebäudeelement 3 und dem Wandelement 1 muss eine unmittelbare Kopplung zur optimalen Wärmeübertragung ohne Hinterlüftung und ohne einen Luftspalt dazwischen ausgebildet sein. Andernfalls kann sich Kondenswasser bilden, was dem Wandelement 1 Schaden zufügen kann. Zudem würde eine Hinterlüftung die Wärmekopplung zwischen Wandelement 1 und Klimaelement 4 massiv verschlechtern. Eine Wärmeleitschicht kann auf der Rückseite des Trägerelements 5 zur Verbesserung der Wärmeübertragung angebracht sein.

Das erfindungsgemässe Verfahren zum Erstellen einer Gebäudehülle 18 durch die Montage einer Vielzahl von Gebäudeelementen 3 umfasst die folgenden Verfahrensschritte:
a) Bereitstellung eines Wandelements 1 sowie in ausreichender Anzahl benötigte Lamellenelemente 9, Klimaelemente 4 und Montageklammern 11;
b) Montieren von mindestens zwei Montageklammern 11 horizontal ausgerichtet in einer Reihe auf dem Wandelement 1;
c) Einsetzen eines Klimaelements 4, klemmend unter die Flügel 13;
d) Fixieren des Klimaelements 4 durch die Montage mindestens zweier weiterer Montageklammern 11 in einer weiteren Reihe direkt oberhalb oder unterhalb der Klimaelemente 4;
e) Wiederholen der Schritte c und d, wobei die Klimaelemente 4 einer Reihe jeweils dicht nebeneinander angeordnet werden, bis die Fassade 1 vollständig bedeckt ist;
f) Einsetzen der Lamellenelemente 9 in die U-Aussparungen 12 der Montageklammern 11.

Vorzugsweise werden die Lamellenelemente 2 zusätzlich gesichert, beispielsweise durch Bolzen 17 an den Montageklammern 11, welche in entsprechende Aussparungen eingebracht werden können. Andere Sicherungen sind auch möglich, beispielsweise mit einem Federsystem in einer dafür vorgesehenen Rille im Lamellenelement 9.

Die Module der Gebäudeelemente 3 sind einfach montierbar und demontierbar. Zudem können sie dank der flexiblen Gestaltung des Winkels β an beliebige Standorte sowie an verschiedene Himmelsrichtungen angepasst werden.

### Bezugszeichenliste

- 1: Fassade, Aussenfassade, Wandelement eines Gebäudes
- 2: Sonnenstrahlung
- 3: Gebäudeelement
- 4: Klimaelement
- 5: Trägerelement
- 6: Absorberschicht
- 7: Transparente Wärmedämmung
- 8: Glasplatte
- 9: Lamellenelement
- 10: Tropfnase
- 11: Montageklammer
- 12: U-Bereich
- 13: Flügel
- 14: Boden
- 15: Montageloch
- 16: Befestigungsschraube
- 17: Bolzen
- 18: Gebäudehülle

- b: Höhe
- h: Gesamthöhe
- a: freier Überstand
- c: Breite
- t: Tiefe
- α: Winkel
- β: Grenzwinkel

## Patentansprüche

1. Gebäudeelement (3) zum kachelartigen Verkleiden einer vertikalen Fassade (1) und zur Wärmegewinnung aus solarer Strahlungsenergie mittels transparenter Wärmedämmung (7), umfassend:
a) ein Klimaelement (4) mit
- einem flachen Trägerelement (5) zum flächigen Anbringen an eine Fassade (1);
- einer flächigen Absorberschicht (6), auf der Aussenseite des Trägerelement (5) angebracht mit einer vertikalen Höhe (b), zur Absorption von einfallender Sonnenstrahlung (2);
- und einer die Absorberschicht (6) vollständig abdeckenden, flächigen und transparenten Wärmedämmung (7);
b) und ein flächiges Lamellenelement (9) als Beschattungselement, welches am unteren oder oberen Rand des Klimaelements (4) horizontal oder in einem Winkel (α) nach aussen abfallend dazu anbringbar ist und sich, im montierten Zustand in vertikaler Richtung betrachtet, neben der Absorberschicht (6) und neben der transparenten Wärmedämmung (7) befindet und die Absorberschicht (6) horizontal auf einem Überstand überragt, zur Beschattung einer im Gebrauch darunter angeordneten Absorberschicht (6);
wobei durch das Verhältnis des Überstandes zur Höhe (b) der Absorberschicht (6) ein Grenzwinkel (β) einstellbar ist, unter welchem einfallende Sonnenstrahlung (2) mindestens teilweise auf die Absorberschicht (6) auftreffen kann und über welchem die Absorberschicht (6) vollständig beschattet ist.

2. Gebäudeelement (3) nach Anspruch 1, **dadurch gekennzeichnet, dass** im montierten Zustand das Lamellenelement (9) die Wärmedämmung (7) um einen freien Überstand (a) überragt.

3. Gebäudeelement (3) nach Anspruch 1 oder 2, **dadurch gekennzeichnet, dass** der Grenzwinkel (β) zwischen 12° und 75°, vorzugsweise zwischen 40° und 70° ist.

4. Gebäudeelement (3) nach einem der vorhergehenden Ansprüche, **dadurch gekennzeichnet, dass** der Überstand des Lamellenelements (9) zwischen 40 mm und 200 mm, vorzugsweise zwischen 80 mm und 150 mm beträgt, und die Höhe (b) der Absorberschicht (6) zwischen 100 mm und 500 mm, noch bevorzugter zwischen 150 mm und 250 mm beträgt.

5. Gebäudeelement (3) nach einem der vorhergehenden Ansprüche, **dadurch gekennzeichnet, dass** das Lamellenelement (9) auf seiner Unterseite nahe am äusseren Rand eine Tropfnase (10) in Form einer Furche aufweist.

6. Gebäudeelement (3) nach einem der vorhergehenden Ansprüche, **dadurch gekennzeichnet, dass** das Lamellenelement (9) mindestens an seiner oberen Oberfläche ein Gefälle zwischen α = 1° bis 20°, bevorzugt zwischen α = 2° bis 5° aufweist, damit Regenwasser abfliessen kann.

7. Gebäudeelement (3) nach einem der vorhergehenden Ansprüche, **dadurch gekennzeichnet, dass** das Lamellenelement (9) in heller Farbe ausgeführt ist, welche weniger als 50% der auftreffenden Infrarotstrahlung absorbiert und vorzugsweise aus Naturstein, Beton, insbesondere Schaumbeton, Mörtel, Ton, Keramik, Kalksandstein, Holz, Metall oder Kunststoff gefertigt ist.

8. Gebäudeelement (3) nach einem der vorhergehenden Ansprüche, **dadurch gekennzeichnet, dass** die transparente Wärmedämmschicht (7) Siliciumdioxid (Glas), Kieselsäure, Aerogel, Wasserglas, Natronwasserglas, Kaliwasserglas, Glasvlies, Kunstharz, Plexiglas oder eine Kombination davon umfasst.

9. Gebäudeelement (3) nach einem der vorhergehenden Ansprüche, **dadurch gekennzeichnet, dass** die Absorberschicht (6) aus Siliciumcarbid, Siliciumcarbonat, Silikatfarbe, Silikonharzfarbe, Dispersionsfarbe, Mörtel oder aus einer Kombination daraus gefertigt ist.

10. Gebäudeelement (3) nach einem der vorhergehenden Ansprüche, **dadurch gekennzeichnet, dass** es einen Fassadenabschnitt von 15 bis 40 cm Gesamthöhe (h) und 50 bis 200 cm Breite (c) bedeckt.

11. Gebäudeelement (3) nach einem der vorhergehenden Ansprüche, umfassend zwei oder mehr U-förmige Montageklammern (11) mit seitlich tellerförmig umgebogenen Flügeln (13), welche direkt an eine Fassade (1) montierbar sind, wobei unter den Flügeln (13) Klimaelemente (4) einklemmbar sind und wobei das Lamellenelement (9) zum Befestigen in den U-Bereichen (12) dieser Montageklammern (11) eingeklemmt werden kann.

12. Gebäudehülle (18) umfassend ein wärmespeicherndes Wandelement (1) mit einer Aussenfassade, die mit einer Vielzahl kachelartig angeordneter Gebäudeelemente (3) nach einem der vorherigen Ansprüche verkleidet ist.

13. Gebäudehülle (18) nach Anspruch 12, **dadurch gekennzeichnet, dass** das wärmespeichernde Wandelement (1) angrenzend an das Gebäudeelement (3) mineralienbasiert ist, insbesondere basierend auf Backstein, Mauerwerk, Beton, insbesondere Schaumbeton, Mörtel, Ton, Keramik, Kalksandstein, Lehm, oder eine beliebige Kombination daraus.

14. Gebäudehülle (18) nach einem der Ansprüche 12 bis 13, **dadurch gekennzeichnet, dass** zwischen dem Gebäudeelement (3) und dem Wandelement (1) eine unmittelbare Kopplung zur optimalen Wärmeübertragung ohne Hinterlüftung und ohne einen Luftspalt dazwischen ausgebildet ist.

15. Verfahren zum Erstellen einer Gebäudehülle (18) durch die Montage einer Vielzahl von Gebäudeelementen (1) nach Anspruch 11, umfassend die Verfahrensschritte:
a) Bereitstellung eines Wandelements (1) sowie in ausreichender Anzahl benötigte Lamellenelemente (9), Klimaelemente (4) und Montageklammern (11);
b) Montieren von mindestens zwei Montageklammern (11) horizontal ausgerichtet in einer Reihe auf dem Wandelement (1);
c) Einsetzen eines Klimaelements (4), klemmend unter die Flügel (13);
d) Fixieren des Klimaelements (4) durch die Montage mindestens zweier weiterer Montageklammern (11) in einer weiteren Reihe direkt oberhalb oder unterhalb der Klimaelemente (4);
e) Wiederholen der Schritte c) und d), wobei die Klimaelemente (4) einer Reihe jeweils dicht nebeneinander angeordnet werden, bis die Fassade (1) vollständig bedeckt ist;
f) Einsetzen der Lamellenelemente (9) in die U-Aussparungen der Montageklammern (11).

16. Verfahren nach Anspruch 15, **dadurch gekennzeichnet, dass** die Lamellenelemente (2) zusätzlich durch Bolzen (17) an den Montageklammern (11) gesichert werden, welche in entsprechende Aussparungen eingebracht werden können.

## Claims

1. A building element (3) for the tiled cladding of a vertical façade (1) and the generation of heat from solar radiation energy by means of transparent thermal insulation (7), comprising:
a) an air conditioning element (4) with
- a flat carrier element (5) for flat application to a façade (1);
- a flat absorber layer (6) applied to the exterior side of the carrier element (5) with a vertical height (b) for the absorption of incident solar radiation (2);
- and a flat, transparent thermal insulation (7) that completely covers the absorber layer (6) ;
b) and a flat slat element (9) as a shading element, which can be applied to the lower or upper edge of the air conditioning element (4) horizontally or sloping outwardly at an angle (α) thereto, and, in the mounted state as viewed in a vertical direction, is located next to the absorber layer (6) and next to the transparent thermal insulation (7) and projects horizontally over the absorber layer (6) on an overhang for shading an absorber layer (6) arranged below it during use;
wherein the ratio between the overhang and the height (b) of the absorber layer (6) makes it possible to set a limit angle (β) at which incident solar radiation (2) can at least partially hit the absorber layer (6) and over which the absorber layer (6) is completely shaded.

2. The building element (3) according to claim 1, **characterized in that** the slat element (9) projects over the thermal insulation (7) by one free overhang (a) in the mounted state.

3. The building element (3) according to claim 1 or 2, **characterized in that** the limit angle (β) is between 12° and 75°, preferably between 40° and 70°.

4. The building element (3) according to one of the preceding claims, **characterized in that** the overhang of the slat element (9) measures between 40 mm and 200 mm, preferably between 80 mm and 150 mm, and the height (b) of the absorber layer (6) measures between 100 mm and 500 mm, even more preferably between 150 mm and 250 mm.

5. The building element (3) according to one of the preceding claims, **characterized in that** the slat element (9) has a drip nose (10) in the form of a furrow on its lower side near the outer edge.

6. The building element (3) according to one of the preceding claims, **characterized in that** at least the upper surface of the slat element (9) has a gradient of between α = 1° to 20°, preferably of between α = 2° to 5°, so that rainwater can run off.

7. The building element (3) according to one of the preceding claims, **characterized in that** the slat element (9) is designed with a bright color, which absorbs less than 50% of the incident infrared radiation, and is preferably made out of natural stone, concrete, in particular foamed concrete, mortar, clay, ceramic, sand-lime brick, wood, metal or plastic.

8. The building element (3) according to one of the preceding claims, **characterized in that** the transparent thermal insulation layer (7) comprises silicon dioxide (glass), silicic acid, aerogel, water glass, sodium water glass, potassium water glass, glass fleece, synthetic resin, plexiglass, or a combination thereof.

9. The building element (3) according to one of the preceding claims, **characterized in that** the absorber layer (6) is made out of silicon carbide, silicon carbonate, silicate paint, silicone resin paint, dispersion paint, mortar, or a combination thereof.

10. The building element (3) according to one of the preceding claims, **characterized in that** it covers a façade section with an overall height (h) of 15 to 40 cm and a width (c) of 50 to 200 cm.

11. The building element (3) according to one of the preceding claims, comprising two or more U-shaped assembly clamps (11) with wings (13) laterally curved like a plate, which can be directly mounted on a façade (1), wherein air conditioning elements (4) can be clamped under the wings (13), and wherein the slat element (9) can be clamped in the U-areas (12) of these mounting clamps (11) for fastening purposes.

12. A building envelope (18) comprising a heat-retaining wall element (1) with an outer façade, which is clad with a plurality of tiled building elements (3) according to one of the preceding claims.

13. The building envelope (18) according to claim 12, **characterized in that** the heat-retaining wall element (1) adjoining the building element (3) is mineral based, in particular based on bricks, masonry, concrete, in particular foamed concrete, mortar, clay, ceramic, sand-lime brick, loam, or any combination thereof.

14. The building envelope (18) according to one of claims 12 to 13, **characterized in that** a direct coupling is formed between the building element (3) and the wall element (1) for optimal heat transfer without rear ventilation and without an airgap in between.

15. A method for creating a building envelope (18) by assembling a plurality of building elements (1) according to claim 11, comprising the following procedural steps:
a) Providing a wall element (1) and a requisite number of slat elements (9), air conditioning elements (4) and mounting brackets (11);
b) Mounting at least two mounting clamps (11) aligned horizontally in a row on the wall element (1);
c) Inserting an air conditioning element (4) clamped under the wings (13);
d) Fixing the air conditioning element (4) in place by assembling at least two additional mounting backets (11) in an additional row directly above or below the air conditioning elements (4);
e) Repeating steps c) and d), wherein the respective air conditioning elements (4) in one row are arranged closely together until the façade (1) is completely covered;
f) Inserting the slat elements (9) into the U-recesses of the mounting clamps (11).

16. The method according to claim 15, **characterized in that** the slat elements (2) are additionally secured to the assembly clamps (11) via bolts (17), which can be inserted into corresponding recesses.

## Revendications

1. Élément de bâtiment (3), destiné à habiller à la manière d'un carrelage une façade (1) verticale et à produire de la chaleur à partir d'une énergie solaire gagnée par calorifugeage transparent (7), comprenant :
a) un élément de climatisation (4) pourvu
- d'un élément porteur (5) plat, destiné à être appliqué à plat sur une façade (1) ;
- d'une couche absorbante (6) plane, appliquée sur la face extérieure de l'élément porteur (5) avec une hauteur (b) verticale, destinée à absorber un rayonnement solaire (2) incident ;
- et d'une isolation thermique (7) plane et transparente, recouvrant totalement la couche absorbante (6);
b) et un élément lamellaire (9) plan, faisant office d'élément d'ombrage, lequel est susceptible d'être appliqué sur le bord inférieur ou supérieur de l'élément de climatisation (4), à l'horizontale ou sous un angle (α) incliné vers l'extérieur par rapport à celui-ci et se trouvant à l'état monté, considéré dans la direction verticale à côté de la couche absorbante (6) et à côté de l'isolation thermique (7) transparente et saillant par-dessus la couche absorbante (6), à l'horizontale sur un surplomb, pour assurer l'ombrage d'une couche absorbante (6) sous-jacente lors de l'utilisation;
par le rapport du surplomb à la hauteur (b) de la couche absorbante (6), un angle limite (β) étant réglable, sous lequel un rayonnement solaire (2) incident peut atteindre au moins partiellement la couche absorbante (6) et par l'intermédiaire duquel la couche absorbante (6) est totalement ombragée.

2. Élément de bâtiment (3) selon la revendication 1, **caractérisé en ce qu'**à l'état monté, l'élément lamellaire (9) saillit par-dessus l'isolation thermique (7) de la valeur d'un surplomb libre (a).

3. Élément de bâtiment (3) selon la revendication 1 ou 2, **caractérisé en ce que** l'angle limite (β) est compris entre 12° et 75°, de préférence entre 40° et 70°.

4. Élément de bâtiment (3) selon l'une quelconque des revendications précédentes, **caractérisé en ce que** le surplomb de l'élément lamellaire (9) est compris entre 40 mm et 200 mm, de préférence entre 80 mm et 150 mm, et **en ce que** la hauteur (b) de la couche absorbante (6) est comprise entre 100 mm et 500 mm, de manière encore plus préférentielle, entre 150 mm et 250 mm.

5. Élément de bâtiment (3) selon l'une quelconque des revendications précédentes, **caractérisé en ce que** l'élément lamellaire (9) comporte sur sa face inférieure, à proximité du bord extérieur un goutte à goutte (10) sous la forme d'un sillon.

6. Élément de bâtiment (3) selon l'une quelconque des revendications précédentes, **caractérisé en ce que** l'élément lamellaire (9) comporte au moins sur sa surface supérieure une pente comprise entre α = de 1 ° à 20°, de préférence comprise entre α = de 2° à 5°, pour que les eaux pluviales puissent s'écouler.

7. Élément de bâtiment (3) selon l'une quelconque des revendications précédentes, **caractérisé en ce que** l'élément lamellaire (9) est réalisé en couleur claire, laquelle absorbe moins de 50 % du rayonnement infrarouge incident et **en ce qu'**il est fabriqué de préférence en pierre naturelle, en béton, notamment en béton cellulaire, en mortier, en argile, en céramique, en brique silico-calcaire, en bois, en métal ou en matière plastique.

8. Élément de bâtiment (3) selon l'une quelconque des revendications précédentes, **caractérisé en ce que** la couche isolante thermique (7) transparente comprend un dioxyde de silicium (verre), une silice, un aérogel, un verre soluble, un silicate de soude, un silicate de potassium, un voile de verre, une résine synthétique, un plexiglas ou une association de ces derniers.

9. Élément de bâtiment (3) selon l'une quelconque des revendications précédentes, **caractérisé en ce que** la couche absorbante (6) est fabriquée en un carbure de silicium, en un carbonate de silicium, en une peinture silicate, en une résine de silicone, en une peinture à dispersion, en un mortier ou en une association de ces derniers.

10. Élément de bâtiment (3) selon l'une quelconque des revendications précédentes, **caractérisé en ce qu'**il recouvre une portion de façade d'une hauteur totale (h) de 15 à 40 cm (h) et d'une largeur (c) de 50 à 200 cm.

11. Élément de bâtiment (3) selon l'une quelconque des revendications précédentes, comprenant trois crampons de montage (11) en forme de U ou plus, pourvus d'ailettes (13) recourbées latéralement en forme de cuvettes, lesquelles sont susceptibles d'être montées directement sur une façade (1), sous les ailettes (13) étant enserrables des éléments de climatisation (4) et en ce que pour la fixation, l'élément lamellaire (9) peut s'enserrer dans les zones en forme de U (12) desdits crampons de montage (11).

12. Enveloppe de bâtiment (18) comprenant un élément de paroi (1) accumulateur d'eau, pourvu d'une façade extérieure, qui est habillée d'une pluralité d'éléments de bâtiment (3) placés à la manière d'un carrelage, selon l'une quelconque des revendications précédentes.

13. Enveloppe de bâtiment (18) selon la revendication 12, **caractérisée en ce que** l'élément de paroi (1) accumulateur thermique adjacent à l'élément de bâtiment (3) est à base de minéraux, notamment à base de brique, de maçonnerie, de béton, notamment de béton cellulaire, de mortier, d'argile, de céramique, de brique silico-calcaire, de terre glaise ou d'une association quelconque de ces derniers.

14. Enveloppe de bâtiment (18) selon l'une quelconque des revendications 12 à 13, **caractérisée en ce qu'**entre l'élément de bâtiment (3) et l'élément de paroi (1) est conçu un couplage direct pour la transmission thermique directe sans rétro-aération et sans une fente d'air entre eux.

15. Procédé, destiné à créer une enveloppe de bâtiment (18) par le montage d'une pluralité d'éléments de bâtiment (1) selon la revendication 11, comprenant les étapes de procédé consistant à :
a) mettre à disposition un élément de paroi (1), ainsi qu'un nombre suffisant d'éléments lamellaires (9), d'éléments de climatisation (4) et de crampons de montage (11) nécessaires ;
b) monter au moins deux crampons de montage (11) en orientation horizontale en une rangée sur l'élément de paroi (1) ;
c) insérer un élément de climatisation (4), enserré sous les ailettes (13) ;
d) fixer l'élément de climatisation (4) par le montage d'au moins deux crampons de montage (11) additionnels dans une rangée supplémentaire, directement au-dessus ou en-dessous des éléments de climatisation (4) ;
e) répéter les étapes c) et d), les éléments de climatisation (4) d'une rangée étant placés chacun côte à côte, jusqu'à ce que la façade (1) soit totalement recouverte ;
f) insérer les éléments lamellaires (9) fdans les évidements en forme de U des crampons de montage (11) .

16. Procédé selon la revendication 15, **caractérisé en ce que** l'on bloque additionnellement les éléments lamellaires (2) sur les crampons de montage (11) par des boulons (17), lesquels peuvent être introduits dans des encoches correspondantes.
